# EUROPEAN PATENT APPLICATION

(11) **EP 0 959 172 A1**
(43) Date of publication of application: **24.11.1999**
(21) Application number: 99830282.2
(22) Date of filing: 10.05.1999
(51) Int. Cl.: D06F 43/08, B01D 46/00, B01D 46/10

(54) **A filter element for a product washing and/or drying machine, and a machine equipped with said filter element**

(30) Priority: 15.05.1998 IT BO980318
(71) Applicant: AMA UNIVERSAL S.p.A., I-40013 Castelmaggiore (Bologna) (IT)
(72) Inventor: Serafini, Enrico, 40013 Castel Maggiore (IT); Soffritti, Alessandro, 40139 Bologna (IT)
(74) Representative: Pederzini, Paolo

(57) **Abstract**

A filter element (9) consisting of one or more wires (10) designed to form a mechanical barrier to prevent the passage of droplets (11) present in a gas flow and to promote the condensation of an evaporated substance present within the gas flow, thus reducing its concentration; the filtering/condensing action is carried out by the element (9) located downstream of a condenser (6) and upstream of a heating element, such as a heat pump (7) or a machine (1) heater (8). The filter element (9) is able to cause the various particles (drops) to stick to one or more portions of the wire (10).

## Description

The present invention relates to a filter element for a product washing and/or drying machine, and a machine equipped with said filter element.

Various types of filters for the filtration of a variety of substances are known. All such filters used in a product washing and/or drying machine are of complex construction and are made of special, expensive materials for the filtration of at least one substance. Moreover, in some cases, such known filters are only effective in given operating conditions, for example at a given operating temperature and/or pressure.

The aim of the present invention is, therefore, to overcome the above-mentioned disadvantages by providing a filter element for a product washing and/or drying machine, which has a simple structure, and which is designed to operate in an efficient, safe and reliable way.

The technical features of the present invention, in accordance with the above aims, are apparent in the claims herein, and the advantages are more clearly described in the detailed description below, with reference to the accompanying drawings, which illustrate an embodiment of the invention, without limiting the scope of its application, and in which:
- Figure 1 is a schematic view of the filter element according to the present invention, integrated in a product washing and/or drying machine, with some parts cut away to better illustrate others;
- Figure 2 is a schematic view of a scaled-up detail from Figure 1;
- Figure 3 illustrates a scaled-up detail of the filter element;
- Figure 4 is a schematic illustration of a scaled-up detail of an alternative embodiment of the filter element according to the present invention.

With reference to the accompanying drawings, a product 3 washing and/or drying machine is illustrated, labelled 1 as a whole.

The machine 1 has a washing drum 2, in which the products 3, such as clothes (labelled 3), fabrics, metal or non-metal objects (labelled 3'), or any other type of product, can be washed with a liquid substance (not illustrated). The products 3, 3' may then be dried, for example using hot air, in order to extract the substance, by evaporation, from the products 3, 3' in the machine 1 drum 2.

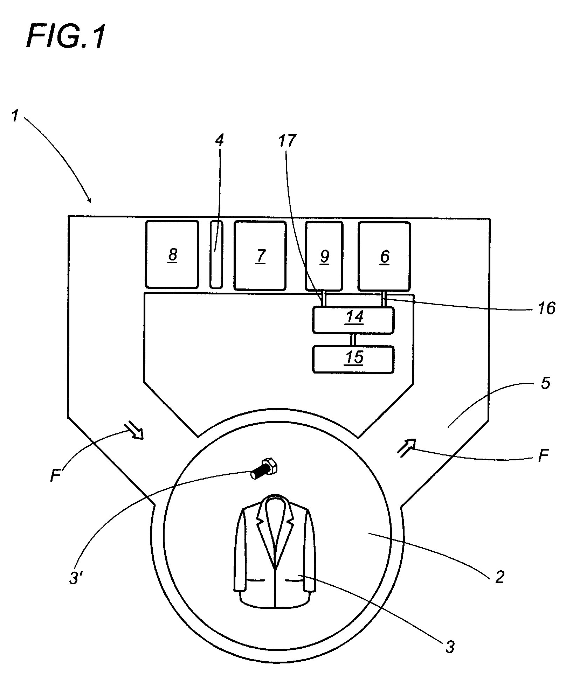

The machine 1 has means 4 for the forced circulation of the air/evaporated substance mixture (in a direction indicated by the arrows F in Figure 1) while the products 3, 3' are being dried. Said means 4, already known and so not described in detail, may be one or more fans (not illustrated) arranged, for example, after the outfeed 5 of the drum 2.

Downstream of the outfeed 5 of the drum 2 there are also, in the machine 1 closed circuit, a condenser 6, to which the air/evaporated substance mixture, labelled 18, is directed from the drum 2 to condense at least part of the substance evaporated in the air; heating means comprising, for example, a heat pump 7 acting as a pre-heater for the air which is free of the substance or at least has a reduced concentration of the substance, and a heater 8 for heating the air, to be fed to the drum 2 again at a given temperature which is sufficient to extract the substance from the products 3, 3' in the drum 2 by evaporation.

The condenser 6, heat pump 7 and heater 8 are already known and, therefore, are not described in detail.

In accordance with the present invention, a filter element 9 is positioned downstream of the condenser 6 and upstream of the heating means, that is to say, of the machine 1 heat pump 7 and the heater 8 relative to the direction F of circulation of the flow of the gaseous mixture 18.

In accordance with a preferred embodiment of the present invention, the filter element 9 consists of at least one wire 10 defining a mechanical barrier designed to prevent the passage of drops 11 of said liquid substance through the filter element 9 by causing the respective drop 11 of the liquid substance to stick to one or more portions of the wire 10 in the filter element 9.

The wire 10 is preferably also designed to condense at least part of the evaporated substance in a gas flow 18, to reduce the concentration of the substance in the gas flow 18.

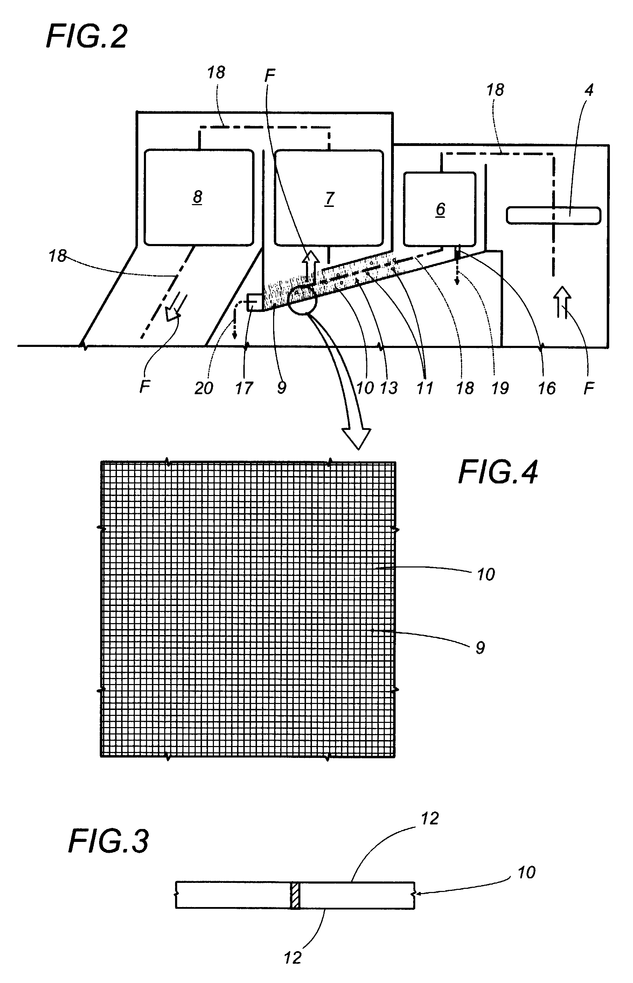

The wire 10 may by wound in a disorderly way, forming an irregular surface which, when the flow of cold air from the condenser 6 makes contact with it, causes the evaporated substance in the gas flow 18 to condense. Said surface also has gaps 13 for the passage of the gas. The irregular surface of the wire 10, therefore, extends in a disorderly fashion on various planes and is three-dimensional. In an alternative embodiment of the present invention (see Figure 4), the wire 10 may also be wound in an orderly way, forming a regular surface, again for condensing the evaporated substance in the gas flow 18. Again, the surface obtained in this way may have gaps 13 for the passage of the gas flow 18. In this embodiment, the regular surface of the wire 10 extends in an orderly fashion on various planes and is three-dimensional. The substance in question may, for example, be a flammable solvent, for example, hydrocarbons, which can be used for washing products 3, 3', and the gas flow 18 may be a mixture of air and evaporated solvent.

The filter element 9 preferably has at least one wire 10 made of metal (for example, stainless steel) and in the shape of a tape (for example, with two wider surfaces 12, see Figure 3).

The substance is filtered from the gas flow 18 arriving from the condenser 6 by condensation, designed to further reduce the concentration of the evaporated substance in the gas flow 18.

The substance condensed in the condenser 6 and the filter element 9 respectively labelled 19 and 20, may be transferred through suitable pipes 16 and 17 to a separator 14, then saved in a collection tank 15 for the liquid substance.

Therefore, according to the embodiment illustrated in Figure 1, the present invention relates to a filter element 9 for filtering the solvent by means of condensation in a closed circuit machine 1 for washing and/or drying products 3, 3'.

The filter element 9 according to the present invention can be used in any product washing and/or drying machine.

Therefore, it is sufficient that the machine 1 has a condenser 6 and a heat pump 7 and/or heater 8 in the circuit in order to position the filter element 9 downstream of the condenser 6 and upstream of the machine 1 heat pump 7 and/or heater 8 relative to the direction F of circulation, to filter the substance by condensation, and so further reduce the concentration of the evaporated substance in the gas flow from the condenser 6.

The filter element 9 with the wire 10 wound in a disorderly way can be positioned in any pipe or compartment without special preparation of the machine. As a result, the filter element 9 is also easily changed and/or modified.

In contrast, the filter element 9 with the wire 10 wound in an orderly way may consist of a prefabricated structure with a plurality of nets, for example of the type illustrated in Figure 4, arranged one behind the other and, if necessary, offset to form a mechanical barrier. The nets 10 may be of the same or different shape and material. Moreover, the mesh of the respective nets may be of different thickness and size.

The present invention may be subject to numerous variations, all encompassed by the original design concept. Moreover, all parts may be substituted with technically equivalent elements.

## Claims

1. An element for filtering a substance, said filter element (9) being applicable in any pipe or circuit for the passage of the substance, characterised in that it consists of at least one wire (10) defining a mechanical barrier designed to prevent the passage of drops (11) of the substance, in liquid form, through the filter element (9) by causing the respective drop (11) of the liquid substance to stick to a portion of the wire (10) defining the filter element (9).

2. The filter element according to claim 1, where the substance is partly liquid and partly gaseous, circulating within the circuit and constituting at least one component of a gas flow (18), the filter element being characterised in that said wire (10) is designed to condense at least part of the evaporated substance in the gas flow (18), thus reducing the concentration of the substance in the gas flow (18).

3. The filter element according to claim 2, characterised in that the wire (10) is wound in a disorderly way, forming an irregular surface designed to condense the evaporated substance in the gas flow (18) and having gaps (13) for the passage of the gas.

4. The device according to claim 2 or claim 3, characterised in that the irregular surface of the wire (10) extends in a disorderly fashion on various planes and is three-dimensional.

5. The filter element according to claim 2, characterised in that the wire (10) is wound in an orderly way, forming a regular surface designed to condense the evaporated substance in the gas flow (18) and having gaps (13) for the passage of the gas.

6. The filter element according to claim 5, characterised in that the regular surface of the wire (10) extends in an orderly fashion on various planes and is three-dimensional.

7. The filter element according to any of the foregoing claims from 2 to 6, characterised in that the substance is a solvent which can be used for washing products (3, 3') and the gas flow (18) is a mixture of air and evaporated solvent.

8. The filter element according to any of the foregoing claims from 1 to 7, characterised in that the wire (10) is made of metal.

9. The filter element according to any of the foregoing claims from 1 to 8, characterised in that the wire (10) is tape-shaped, having two wider surfaces (12).

10. A product washing and/or drying machine equipped with, amongst other things, a condenser (6) and heating means (7, 8), all being fitted inside a circuit with means (4) for circulating a gas flow (18) in a direction (F), the machine (1) being characterised in that it is equipped with a filter element (9) made according to one of the claims from 1 to 9, said filter element (9) being positioned downstream of the condenser (6) and upstream of the heating means (7, 8) in the machine (1) relative to the direction (F) of circulation.

11. The machine according to claim 10, characterised in that the condenser (6) is positioned close to the filter element (9), allowing it to cool the wire (10) of the filter element (9).

12. The machine according to claim 10 or claim 11, characterised in that the filter element (9) filters the substance by means of condensation, being designed to further reduce the concentration of the evaporated substance in the gas flow (18) from the condenser (6).
